# EUROPÄISCHE PATENTSCHRIFT

(11) **EP 3 024 193 B1**
(45) Veröffentlichungstag und Bekanntmachung des Hinweises auf die Patenterteilung: **27.02.2019**
(21) Anmeldenummer: 14194581.6
(22) Anmeldetag: 24.11.2014
(51) Int. Cl.: H04L 29/06

(54) **Verfahren und System zur nachhaltigen Abwehr von Botnet Schadsoftware**
Method and system for sustainable defence against botnet malware
Procédé et système de défense durable contre des logiciels malveillants de Botnet

(43) Veröffentlichungstag der Anmeldung: 25.05.2016
(73) Patentinhaber: Deutsche Telekom AG, 53113 Bonn (DE)
(72) Erfinder: Kraft, Andreas, 14129 Berliin (DE); Schmall, Markus, 40223 Düsseldorf (DE); Manecke, Alexander, 12163 Berlin (DE); Peusquens, Rüdiger, 50354 Hürth (DE); Schroer, Markus, 40549 Düsseldorf (DE); Sinning, Thorsten, 60487 Frankfurt am Main (DE)
(74) Vertreter: Vossius & Partner Patentanwälte Rechtsanwälte mbB

(56) Entgegenhaltungen:
- EP-A2- 2 472 822
- US-A1- 2009 328 216
- US-A1- 2010 036 947
- US-A1- 2010 162 399

## Beschreibung

### GEBIET DER ERFINDUNG

Die vorliegende Erfindung betrifft den Bereich der Telekommunikation, insbesondere ein Verfahren, und eine Vorrichtung bzw. ein System zur zeitnahen Identifizierung von Geräten, die mit Schadsoftware, insbesondere Klientensoftware für Botnetze, infiziert sind. Zudem betrifft die Erfindung auch ein Verfahren und System mit dem ein Benutzer eines privaten bzw. lokalen Netzwerks (z.B. LAN) detaillierte Information zum tatsächlich infizierten Gerät erhält. Zusätzlich zu den Informationen werden auch spezifische, vorzugsweise automatische Handlungsabläufe möglich, beispielsweise das Beeinflussen des Datenverkehrs.

Ein Botnet oder Botnetz ist eine Gruppe von kompromittierten Computersystemen mit automatisierten Computerprogrammen. Ein einzelner Rechner wird häufig als Bot bezeichnet.. Die Bots (von englisch: robot, "Roboter") laufen auf vernetzten Rechnern, deren Netzwerkanbindung sowie lokale Ressourcen und Daten ihnen zur Verfügung stehen. In Deutschland gab es 2010 über 470.000 solcher Bots, von denen im Durchschnitt etwa 2.000 pro Tag aktiv waren. Betreiber illegaler Botnetze installieren die Bots ohne Wissen der Inhaber auf Computern und nutzen sie für ihre Zwecke. Die meisten Bots können von einem Botnetz-Operator (auch Bot-Master oder Bot-Herder genannt) über einen Kommunikationskanal überwacht werden und Befehle empfangen. Dieser wird in der Fachsprache als Command-and-Control-Server bezeichnet; Kurzform: C&C oder C2.

Meistens werden Bots benutzt, um Überlastsituationen bei Servern Dritter zu erzeugen oder massenhaft Emails zu verschicken.

Missbrauch von Botnetzen kann beispielsweise dadurch entstehen, wenn eine Datenumleitung auf Webseiten erfolgt, die nur eine Kopie der Originalseite anzeigen und den missbräuchlichen Datenverkehr aufzeichnen. Dieses Verfahren wird häufig als Fast Flux Network bezeichnet. Auch sind Rechner bekannt, die potentielle Angriffsziele von Botnet Rechnern simulieren, diese bezeichnet man auch als Honeypots. Siehe auch http://en.wikipedia.org/wiki/Honeypot_(computing). Honeypotnetzwerke dienen dazu, Missbrauch durch Botnets aufzudecken, zu quantifizieren und die Herkunftsinformationen von infizierten Rechnern zu erkennen.

### STAND DER TECHNIK

Private Netzwerke, bei denen mehrere private Rechner oder sonstige netzwerkfähige Geräte in einem LAN miteinander verbunden sind, werden heutzutage meist mittels eines Routers mit dem Internet verbunden. Mit anderen Worten, Router sind Netzwerkgeräte, die Netzwerkpakete zwischen mehreren Rechnernetzen weiterleiten können. Bekannte Router treffen ihre Weiterleitungsentscheidung vorzugsweise anhand von Informationen aus der Netzwerk-Schicht 3 (in der Regel ist das die IP-Adresse) oder höher. Viele Router übersetzen dabei auch zwischen privaten und öffentlichen IP-Adressen (Network Address Translation (NAT), Port Address Translation). Dieses NAT erfolgt bei IPv4 (Internet Protocol Version 4) beispielsweise wie folgt.

Bei jedem Verbindungsaufbau durch einen internen Rechner im lokalen LAN wird die interne Quell-IP-Adresse durch die öffentliche IP-Adresse des Routers ersetzt. Außerdem wird der Quellport des internen Clients durch einen freien Port des Routers ersetzt, der dadurch belegt wird. Diese Zuordnung wird in der NAT-Tabelle des Routers gespeichert. Der Vorgang wird als PAT (Port and Address Translation) oder Network Address Port Translation (NAPT) bezeichnet.

| lokales Netz (LAN) | | | öffentliches Netz (WAN) | |
|---|---|---|---|---|
| Quelle | Ziel | Router | Quelle | Ziel |
| 192.168.0.1 :4701 | 46.29.100.76:80 | ===== = | 195.69.113.149:6787 | 46.29.100.76:80 |
| 192.168.0.2:5387 | 46.29.100.76:80 | =====> | 195.69.113.149:8709 | 46.29.100.76:80 |
| 192.168.0.3: 1001 | 46.29.100.76:23 | NAT | 195.69.113.149:4806 | 46.29.100.76:23 |

Eine öffentliche IPv4-Adresse (hier im Beispiel 195.69.113.149) wird im Allgemeinen an einen Router vergeben, der auf der einen Seite mit dem WAN-Netzwerkinterface an das öffentliche Internet angeschlossen ist und auf der anderen Seite ein privates LAN für den Kunden/Nutzer eröffnet, welches nur über IP-Adressen aus einem sog. privaten IP-Adressraum verfügt (beispielsweise 192.168.0.0 bis 192.168.255.255). Diese privaten IP-Adressen werden nun an die in diesem LAN angeschlossenen Geräte durch den Router (z.B. DHCP) vergeben oder mittels anderer Verfahren (z.B. AutoIP) zugewiesen.

Durch diese Adressübersetzung in IPv4 ist es nicht möglich, einzelne Datenendgeräte aus dem öffentlichen Internet heraus oder durch den Internet-Anbieter selber zu identifizieren, nur der Router des Kunden/Nutzers (ein Datengerät), der die öffentliche IPv4-Adresse erhalten hat ist bekannt. Im genannten Fall, dass ein beim Kunden/Nutzer angeschlossenes Gerät durch Botnet-Schadsoftware befallen wurde, ist es aber nun vorteilhaft, den Kunden/Nutzer durch eine möglichst genaue Angabe, welches angeschlossene Gerät betroffen ist, tiefergehend zu informieren, damit dieser geeignete Maßnahmen ergreifen kann, z.B. den Einsatz von Antiviren-Software, um die Schadsoftware von seinem Rechner zu entfernen. Heutzutage werden immer mehr Geräte im Heimbereich vernetzt sein, so dass eine genaue Angabe die Fehlersuche durch den Kunden/Nutzer selber beschleunigen oder überhaupt ermöglichen kann. Immer häufiger kommt es inzwischen aber vor, dass sich die Schadsoftware auf Rechnersystemen installiert, bei denen keine oder nur sehr eingeschränkte Möglichkeit zur Installation von Antivirenprogrammen durch den Nutzer besteht. Dieses umfasst z.B. sogenannte Embedded-Systeme, also kleine Rechnersysteme, die eingebundene Funktionen z.B. in Geräten aus dem IT-, Haushalts- und Unterhaltungsbereich erfüllen. Beispiele für solche Geräte sind vernetzte Fernseher, Spielekonsolen, und Heizungsanlagen, aber auch separat angeschlossene Speichersysteme sowie Drucker und Telefonanlagen. Schadsoftware auf diesen Systemen kann im Allgemeinen nicht durch den Nutzer selber, sondern höchstens durch einen Spezialisten entfernt werden. Das hat zur Folge, dass Schadsoftware auf dieser Geräteklasse unbehindert und ggf. unerkannt seine Funktionen durchführen kann.

Die US 2010/036947 A1 offenbart ein Verfahren und eine Vorrichtung zur Reduktion von ungewünschtem Verkehr zwischen Peer-Netzwerken.

Die EP 2 472 822 betrifft ein System und Verfahren zur Beurteilung der Zuverlässigkeit von Blacklisten.

Die US 2010/162399 A1 offenbart ein Verfahren und eine Vorrichtung zur Schutzung eines Netzwerks vor Malware und Botnetaktivität.

Es besteht somit ein Bedarf neue Verfahren bzw. Systeme bereitzustellen, mit denen ein Nutzer tiefergehende Informationen über eine mögliche Infizierung mit Schadsoftware eines im LAN verwendeten Geräts erhält. Zudem kann es wünschenswert sein, dass der Datenverkehr ggf. durch den Internet Access Provider beeinflusst wird, beispielsweise um den Nutzer zu entlasten.

### ZUSAMMENFASSUNG DER ERFINDUNG

Mit dem erfindungsgemäßen Verfahren nach Anspruch 1 bzw. System nach Anspruch 10 wird dieser Bedarf erfüllt. Insbesondere zeichnet sich die vorliegende Erfindung dadurch aus, dass Merkmale des IPv6 vorteilhaft ausgenutzt werden.

Wenn IPv6 (Internet Protocol Version 6; früher auch Internet Protocol next Generation (IPnG)) durch den Internetanbieter vollständig unterstützt wird, so erhält der Router des Kunde/Nutzer anstelle wie oben beschrieben keine IPv4-Adresse, sondern einen (oder mehrere) sogenannten IPv6 Prefix. Ein IPv6 Prefix ist ein Konzept, in dem der Router eines Kunden/Nutzers von einem Internet-Anbieter nicht eine einzelne IPv6-Adresse erhält, sondern einen eindeutigen IPv6-Adressbereich. Innerhalb dieses Bereichs können im LAN des Nutzers/Kunden beliebige IPv6-Adressen verteilt bzw. vergeben werden (sog. Interface Identifier), wobei durch die Eindeutigkeit des Bereichs ebenfalls eine weltweit eindeutige Zuordnung gewährleistet ist und jedes angeschlossene Gerät über diese Adresse weltweit eindeutig identifizierbar ist.

Da diese IPv6-Adresse durch das Gerät bei der Datenkommunikation mit Gegenstellen im Internet genutzt und keine Network Address Translation (NAT) wie bei IPv4 stattfindet (NET44, s. http://en.wikipedia.org/wiki/Network_address_translation, können beim Erkennen von Auffälligkeiten im Rahmen der Verhinderung von Angriffen durch Botnet-Schadsoftware sowohl der Kunde/Nutzer (durch den IPv6-Prefix) als auch das betroffene vernetzte Gerät (durch den lokalen Adressanteil) erkannt werden.

Eine Identifizierung einzelner Geräte kann anhand bestimmter Merkmale der selbstvergebenen IPv6-Adresse erfolgen (im Interface Identifier). Vergibt z.B. das angeschlossene Gerät sich selber eine IPv6-Adresse, so geschieht das häufig mittels des modified EUI-64-Formats (s. http://en.wikipedia.org/wiki/IPv6_address#Modified_EUI-64, bei dem die MAC-Adresse des Gerätenetzwerkadapters benutzt wird. Da die MAC-Adresse häufig auch auf den Hersteller des Gerätes schließen lässt, könnte unter Zuhilfenahme einer Abbildungsdatenbank zumindest der Typ oder der Hersteller des Gerätes grob ermittelt werden.

Zudem kann ein Router auch mehr als einen IPv6 Prefix erhalten, um beispielsweise unterschiedliche Netzdienste, wie z.B. Voice-over-IP-Telefonie, Internet Datenkommunikation oder Internet-Fernsehen, über logisch getrennte Datenverbindungen übertragen und managen zu können.

Gemäß einer erfindungsgemäßen Ausführungsform erhält im Falle einer Botnet-Erkennung der Router vorzugsweise einen eigenen, ggf. weiteren IPv6 Prefix, wenn der Kunde/Nutzer an dem Dienst zur Erkennung von Botnets teilnimmt. Mit anderen Worten, jeder Router, der potentiell an dem erfindungsgemäßen Dienst zur Erkennung von Botnets teilnimmt, erhält vorzugsweisen einen eigenen zusätzlichen IPv6 Prefix. Das Management und die Signalisierung von einem Early Warning System an den Router im Fall einer Auffälligkeit kann dann über Nachrichten an diesen eigenen IPv6 Prefix erfolgen.

Gemäß einer weiteren erfindungsgemäßen Ausführungsform kann dieser IPv6 Prefix erst dann an den Router vergeben werden, wenn eine Auffälligkeit vom Early Warning System erkannt wurde. In diesem Fall ist bereits die Vergabe des IPv6 Prefix eine Signalisierung einer Auffälligkeit im LAN hinter dem Router.

Um eine missbräuchliche Nutzung infizierter Geräte zu verhindern, kann es vorteilhaft sein, den Datenverkehr von infizierten Geräten zu beeinflussen, z.B. zur Limitierung der Bandbreite. So kann beispielsweise bei einer erkannten Auffälligkeit eines Geräts des Intranets der Router dem infizierten Gerät eine IPv6-Adresse aus dem Bereich des speziellen IPv6 Prefix geben. Nachfolgend kann damit dann der Datenverkehr dieses mit Schadsoftware infizierten Gerätes im Internet so umgeleitet und überwacht werden, dass kein Schaden mehr entstehen kann. Beispielsweise kann eine Umleitung in einen Walled Garden (ein Walled Garden ist ein bekanntes Technologiekonzept, das eine eingegrenzte Umgebung beschreibt, in dem Anwendungen nur einen begrenzten Zugriff auf Netzwerk-, Daten- und Rechnerressourcen haben) erfolgen.

Gemäß einer weiteren bevorzugten Ausführungsform werden entsprechende IP-Datenpakete von infizierten Geräten besonders behandelt, so z.B. eine verzögerte Auslieferung oder eine Blockade der IP-Datenpakete von Geräten mit diesem IPv6-Prefix.

Die Erfindung betrifft ein Verfahren zur Konfiguration eines Routers (im Folgenden auch Datengerät genannt), der mit einem Intranet (z.B. LAN) und einem Internet (z.B. WAN) in Verbindung steht. Erfindungsgemäß ist mindestens ein Datenendgerät, vorzugsweise mehrere Datenendgeräte im Intranet mit dem Router verbunden. Beispielsweise kann es sich bei den Datenendgeräten um Computer, Laptops, Tablet PCs, Smartphone, etc. handeln, ohne jedoch darauf beschränkt zu sein.

Der Router tauscht Informationen über mindestens eine Identität dieser Datenendgeräte, mit einem Server aus, der im Internet lokalisiert ist. Der Server vergleicht die mindestens eine Identität des Datenendgeräts mit Identitäten einer ersten Gruppe von Identitäten. Mit anderen Worten, der Server überprüft durch diesen Vergleich, ob das Datenendgerät mit einem Botnet infiziert ist. Wenn ein Vergleich positiv ist, d.h., ein Datenendgerät als infiziert identifiziert erkannt wurde, kann der Router den Datenverkehr des identifizierten Datenendgeräts gezielt beeinflussen, wobei der Datenverkehr der restlichen im Intranet vorhanden Datenendgeräte vorzugsweise nicht beeinflusst wird. Somit kann der Datenverkehr eines als infiziert identifizierten Datenendgeräts vom Router bewusst gefiltert, geblockt und/oder umgeleitet werden, wodurch beispielsweise sichergestellt werden kann, dass das infizierte Datenendgerät keine Schaden anrichten kann. Der Datenverkehr der restlichen Datenendgeräte des Intranets wird vorzugsweise nicht beeinflusst. Gemäß einer weiteren Ausführungsform kann jedoch zusätzlich auch Datenverkehr weiterer Datenendgeräte des Intranets beeinflusst werden, selbst wenn einzelne dieser Datenendgeräte selbst nicht als infiziert identifiziert wurden; ggf. kann so eine weitere Verbreitung der Schadsoftware innerhalb des Intranets vermindert bzw. verhindert werden.

Das erfindungsgemäße Verfahren bzw. System hat gegenüber bekannten Verfahren den bevorzugten Vorteil, dass lediglich der Datenverkehr eines infizierten Geräts innerhalb eines Intranet gezielt beeinflusst wird ohne den Datenverkehr der restlichen Geräte, die nicht als infiziert identifizierten wurden, negativ zu beeinflussen. Die restlichen Geräte des Intranets können mit dem Router und dem Internet wie gewohnt kommunizieren, wenn diese restlichen Geräte nicht als infiziert identifiziert sind, wohingegen gezielt der Datenverkehr von infizierten Geräten beeinflusst werden kann. Dies wird dadurch erreicht, dass die Geräte des Intranets, die mit dem Router verbunden sind, eindeutig über IPv6 identifiziert werden können.

Gegebenenfalls kann es sogar sein, dass Geräte, die an einem Feldbus angeschlossen sind (z.B. Geräte der Heimautomatisierung wie Sensoren und Schalter einer Haussteuerungsanlag, also nicht direkt mittels IP kommunizieren, sondern über eine Bridge bzw. ein Gateway), mit Schadsoftware infiziert sind. Hier kann man zwar nicht mit IPv6 einzelne Geräte identifizieren, aber zumindest die Bridge bzw. das Gateway erkennen, über die diese Kommunikation läuft. Entsprechend kann beispielsweise eine Bridge bzw. ein Gateway, die/das über einen Feldbus mit einem Feldbusgerät verbunden ist mittels IPv6 identifiziert werden, so dass der entsprechende Datenverkehr dieses Feldbusgeräts beeinflusst, beispielsweise umgeleitet bzw. blockiert werden kann. Denkbar ist zusätzlich oder alternativ eine Verlangsamung des Datenverkehrs, um beispielsweise die Stärke von Angriffen durch das Botnet abzumildern, oder/oder sogar das Verändern der Datenpakete, um Anreicherung mit Attributen, die den Absender als verdächtig kennzeichnen, so dass ein Empfänger entsprechend reagieren kann. Ein beispielhafter Vorteil im letzten Fall ist, dass nicht der Internet Access Provider verantwortlich handeln muss, sondern der Empfänger des Datenpakets.

Als Internet wird in der vorliegenden Anmeldung insbesondere ein Netzwerk von in der Regel weit entfernten oder global vernetzten Rechnern wie ein WAN bezeichnet. Ein Internet im Sinne der Erfindung könnte aber auch ein lokales oder Firmennetzwerk sein.

Ferner sieht die Erfindung vor, dass die erste Gruppe von Identitäten von Datenendgeräten solche Datenendgeräten betreffen, die durch eine Schadsoftware manipuliert wurden.

Die Erfindung sieht vorzugsweise vor, dass die Beeinflussung des Datenverkehrs von dem Datenendgerät das Umleiten des Datenverkehrs auf eine vorbestimmte Webseite ist, beispielsweise eine Webseite die von einem Server im Internet angeboten wird. Die Erfindung sieht vorzugsweise vor, dass die Beeinflussung des Datenverkehrs von dem Datenendgerät das Umleiten des Datenverkehrs auf eine vorbestimmte auf dem Router lokal hinterlegte Webseite ist.

Ferner kann die Erfindung so ausgestaltet sein, dass ein System vorgesehen ist, welches das erfindungsgemäße Verfahren durchführt.

Der Vorteil der vorliegende Erfindung liegt darin, die Informationen, die aus einem Honeypot-Netzwerken vorliegen, regelmäßig mit einer Router-Konfiguration abzugleichen, um somit den Schaden eines durch ein oder mehrere Botnetze infizierten Rechners oder lokalen (Heim)Netzwerkes so klein wie möglich zu halten, und für den Benutzer des infizierten Geräts oder lokalen Netzwerkes präsent zu machen, ohne in den Inhalt des Datenverkehrs des infizierten Rechners einzugreifen.

### KURZE BESCHREIBUNG DER ZEICHNUNGEN

Im Folgenden wird das vorliegende erfindungsgemäße Verfahren und System sowie bevorzugte Ausführungsformen der vorliegenden Erfindung unter Bezugnahme auf die Figuren beschrieben. Es zeigen:
- Fig. 1: einen beispielhaften Aufbau einer Infrastruktur zur Durchführung des erfindungsgemäßen Verfahrens, bestehend aus einem Router, welcher in Wechselwirkung mit einem LAN und dem Internet steht.
- Fig. 2: die Adressvergabe in einem reinen IPv4-Netzwerk.
- Fig. 3: die Adressvergabe in einem IPv6-Netzwerk; und
- Fig.4: Details der IVv6 Prefix Vergabe.

### DETAILLIERTE BESCHREIBUNG DER ERFINDUNG

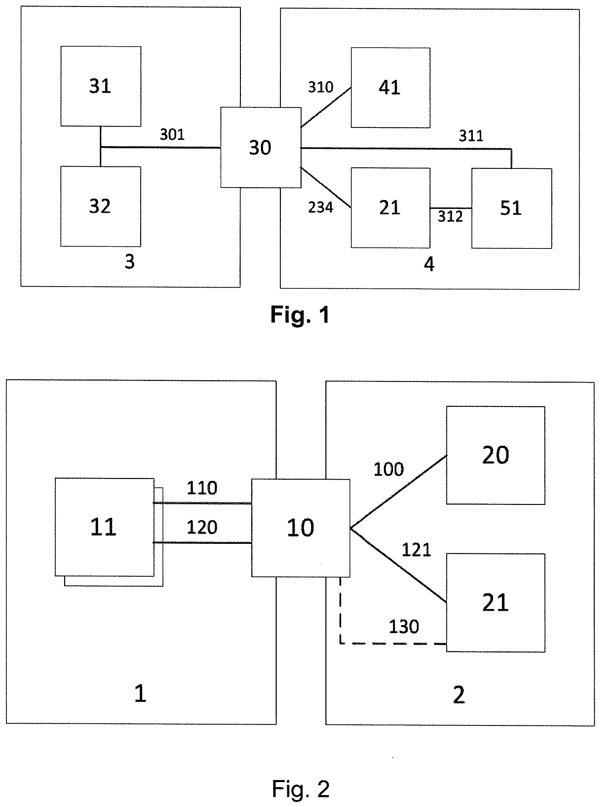

Figur 1 zeigt einen PC 31 (Datenendgerät; Rechner), der durch ein Botnet-Virus infiziert wurde. Zudem ist ein weiteres Datenendgerät 32 in Form eines Smartphones über WLAN mit dem lokalen Netzwerk 3 (LAN 3) verbunden. Der Rechner 31 und das Smartphone 32 sind durch ein LAN mit einem Router 30 (Home Router; Datengerät) verbunden. Das Botnet-Virus auf dem Rechner 31 sendet Datenpakete über den Router 30 in das Internet, insbesondere um leicht zu manipulierende Rechner und Server in der Umgebung aufzuspüren. Der Angriff aus dem LAN 3 des Nutzers, ausgehend von 31 oder 32 über den Router 30 ist mit 301 dargestellt. Ein solcher Angriff/Scan kann in einem Honeypot 51 bzw. einem Honeypotnetzwerk 51 eines Telefonnetzbetreibers aufgezeichnet werden und an das Early Warning System 21 (EWS) geleitet werden. Das EWS stellt eine Blackliste der als boshaft identifizierten Adressen eines frei wählbaren Zeitraums, wie beispielsweise der letzten 30 Minuten zur Verfügung. Ferner kann auch ein Early Warning System (EWS; Server 21) aus Servern bestehen, die Daten aus verschiedenen Honeypots 51 aggregiert.

Mit dem Bezugszeichen 310 ist der Datenfluss eines Angriffs auf einen Rechner, Dienst oder auf eine Infrastrukturkomponente 41 im Internet 4 dargestellt. Der Datenfluss 311 stellt einen Angriff auf einen Dienst auf einem Honeypot oder in einem Honeypot-Netzwerk 51 dar. Schließlich ist mit der Bezugsziffer 312 die Benachrichtigung des Early Warning Systems 21 durch einen Honeypot oder ein Honeypot-Netzwerk 51 über einen detektierten Angriff dargestellt.

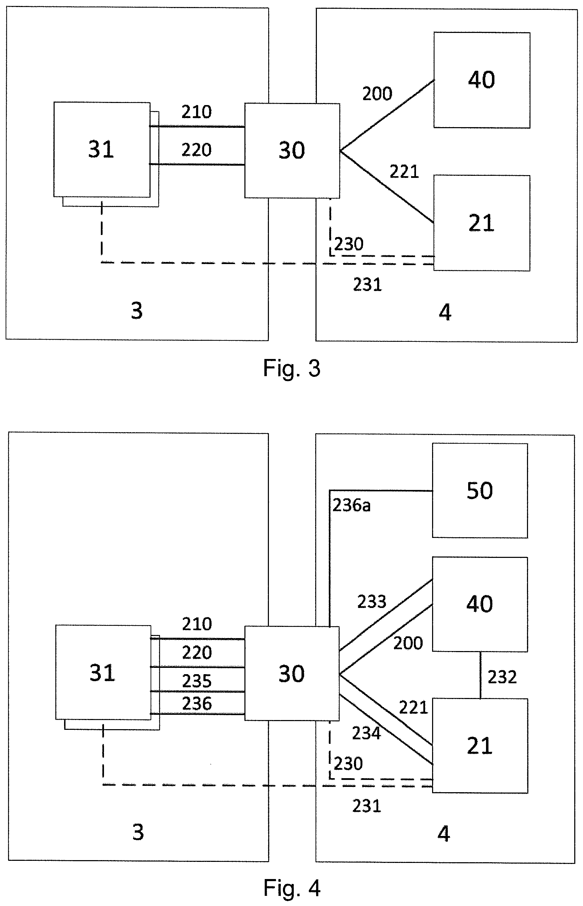

Erfindungsgemäß handelt es sich bei dem Intranet vorzugsweise um ein IPv6 Netzwerk wodurch sichergestellt werden kann, dass nicht nur die öffentliche Adresse des Routers 30 innerhalb des Internets identifizierbar ist, sondern auch die "Adresse" des individuellen Geräts innerhalb des Intranets; dies geschieht vorzugsweise durch die Verwendung des IPv6 Prefix. Näheres dazu wird nachfolgend in Bezug auf Fig. 3 erklärt.

Das Botnet-Virus greift beispielsweise einen Webserver 41 an, den der Benutzer des infizierten Rechners 31 kontaktieren möchte und versursacht eine erhöhte Traffic und wirtschaftlichen Schaden an angegriffenen Webservern. Zudem ist der Netzbetreiber motiviert, den Angriff von Schadsoftware aus seinem Netz heraus so gering wie möglich zu halten. Andernfalls kann es zu Sperrungen einzelner IP Adressbereiche des Anbieters kommen, was für Kunden sehr ärgerlich ist und für Betreiber zu einem erhöhten Supportaufkommen führt.

Figur 2 zeigt die Adressvergabe und die Möglichkeiten zur Erkennung der beteiligten Komponenten in einem reinen IPv4-Netzwerk, wie es heute üblicherweise zum Einsatz kommt. Ein IPv4 LAN 1 ist über einen Router 10 mit dem IPv4 WAN 2 verbunden. Im LAN 1 können mehrere Geräte mit dem Router 10 verbunden sein. Dargestellt ist in Fig. 2 lediglich ein Datenendgerät 11, ohne jedoch darauf beschränkt zu sein. Zudem ist im WAN 2 ein Adressserver 20 dargestellt, der die öffentliche Adresse des Routers 10 vergibt. Dies kann beispielsweise mittels DHCP erfolgen. Beispielsweise erhält ein Heimnetzwerk eines privaten Nutzers eines DSL Anschlusses von Netzbetreiber bei jeder Einwahl eine öffentliche IP Adresse zugewiesen. Schließlich ist in Fig. 2 ein Server 21 im Internet dargestellt, der bei der Identifizierung eines Botnetz hilft. Insbesondere werden entsprechende Server 21 auch EWS-Server (Early Warning System) Server genannt.

Zunächst wird vom Adressserver 20 dem Router 10 eine öffentliche IP vergeben. Dies wird beispielhaft mit dem Datenfluss 100 dargestellt. Beispielsweise die öffentliche IPv4-Adresse 93.219.19.88. Der Datenfluss 110 vom Router 10 zum LAN Endgerät 11 stellt eine Vergabe einer privaten IPv4-Adresse dar. Dies kann beispielsweise mittels DHCP vom Router 10 an das Datenendgerät 11 erfolgen; z.B. 192.168.2.21. Insbesondere erfolgt die Vergabe einer privaten IPv4-Adresse 110 unabhängig von der öffentlichen IPv4-Adresse. Mit dem Bezugszeichen 120 ist die Datenkommunikation ausgehend vom Datenendgerät 11 mit einem Empfänger im Internet, z.B. dem EWS, dargestellt. Die Verbindung zum Router 10 geschieht im LAN 1 über die private IPv4-Adresse. Nachfolgend wird die Datenkommunikation vom Router 10 über das WAN an den EWS 21 weitergeleitet 121. Der Router 10 routed die Verbindung über das WAN 2 an den Empfänger mit der öffentlichen IPv4-Adresse. Der Server 21 (hier: EWS) erhält nur die öffentliche IPv4-Adresse des Routers 10, nicht aber die private IPv4-Adresse des Datenendgerätes 11. Dem EWS 21 ist somit nur die Identität des Routers 10 über die öffentliche IPv4-Adresse bekannt (siehe 130). Ein hinter dem Router liegendes Gerät 11 kann nicht identifiziert werden.

Erfindungsgemäß wird eine detaillierte Erkennung eines infizierten Geräts vorzugweise unter Verwendung von IPv6 erreicht, wie nachfolgend beispielhaft anhand von Fig. 3 beschrieben.

Ein IPv6 LAN 3 ist über einen IPv6 Router (Datengerät) 30 mit einem IPv6 WAN 4 verbunden. Im IPv6 LAN 3 sind ein oder mehrere vernetzte IPv6-Geräte (Datenendgerät) vorhanden, die über den Router 30 auf das WAN 4 (Internet) zugreifen. Zudem ist ein EWS-Server 21 im WAN 4 (Internet) vorhanden, der zur Identifizierung infizierter Geräte dient.

Der Adressserver (z.B. DHCPv6) 40 im WAN vergibt die einen weltweit eindeutigen IPv6 Prefix an den Router 30. Dies ist in Fig. 3 als Datenfluss 200 dargestellt. Der dargestellte Datenfluss 210 zeigt die Vergabe eines eindeutigen Interface Identifiers innerhalb des IPv6 Prefix durch den Router 30 oder eine automatische Vergabe des Interface Identifiers durch das Gerät selber. Die IPv6-Adresse eines Gerätes 31 ändert sich in Abhängigkeit des vergebenen IPv6 Prefix.

Das Gerät 31 kann über die Datenkommunikation 220 mit einem Empfänger im Internet kommunizieren. Die Datenkommunikation läuft zwar physikalisch über den Router 30, aber Adressen werden dort nicht mehr wie unter IPv4 umgesetzt (kein NAT). Die Datenkommunikation wird über 221 vom Router zum Empfänger 21 weitergeleitet. Hier ist beispielsweise eine Kommunikation mit einem EWS 21 dargestellt, jedoch erfolg eine beliebige Datenkommunikation mit beliebigen Rechnern im WAN 4 entsprechend. Dem EWS 21 ist wie in Fig. 2 über 130 die Identität des Routers 30 (über den IPv6 Prefix-Teil) bekannt. Zusätzlich zu der Bekanntheit der Identität des Routers 30 (über 230) ist dem EWS 21 auch die Identität des Datenendgerätes 31 bekannt (über die vollständige IPv6-Adresse; Datenverkehr 231).

Schließlich zeigt Fig. 4 zusätzlich zu Fig. 3 die Vergabe und die Umleitung des Datenverkehrs mittels eines eigenen IPv6 Prefix. Wiederum sind als Komponenten das IPv6 LAN 3, das IPv6 WAN 4, der IPv6 Router (Datengerät) 30 sowie ein oder mehrere vernetzte IPv6-Geräte (Datenendgerät) 31 dargestellt. Im WAN 4 sind der Adressserver (z.B. DHCPv6) 40, der EWS-Server 21 sowie ein Walled Garden 50 mit beschränkten Möglichkeiten dargestellt.

Zunächst wird mit dem Datenfluss 200 die Vergabe eines weltweit eindeutigen IPv6 Prefix an den Router 30 gezeigt. Es erfolgt auch eine Vergabe 210 eines eindeutigen Interface Identifiers innerhalb des IPv6 Prefix durch den Router 30 oder automatische Vergabe des Interface Identifiers durch das Gerät selber. Die IPv6-Adresse eines Gerätes 31 ändert sich in Abhängigkeit des vergebenen IPv6 Prefix. Eine Datenkommunikation 220 kann ausgehend vom Datenendgerät 31 mit einem Empfänger im Internet, z.B. dem EWS 21 stattfinden. Die Datenkommunikation läuft zwar physikalisch über den Router 30, aber Adressen werden dort nicht mehr umgesetzt wie bei IPv4. Bezugsziffer 221 zeigt ein Weiterleiten der Datenkommunikation zum Empfänger 21.

Dem EWS 21 ist wie in Fig. 2 bei 130 die Identität des Routers 30 (über den IPv6 Prefix-Teil) bekannt; dies ist beispielhaft mit der Bezugsziffer 230 dargestellt. Zusätzlich zu diesem Datenverkehr 230, ist dem EWS 21 auch die Identität des Datenendgerätes 31 selbst bekannt (über die vollständige IPv6-Adresse; siehe 231).

Erfindungsgemäß kann der EWS 21 den Adressserver 40 zur Vergabe eines speziellen IPv6 Prefix benachrichtigen 232, für den Fall eines Verdachts einer Identifizierung. Entsprechend wird ein spezieller IPv6 Prefix nach Anforderung durch den EWS 21 an den Router 30 vergeben 233.

Mit den Bezugsziffern 234 ist zudem eine optionale Kommunikation zwischen EWS 21 und Router 30 dargestellt. Mit Bezugsziffer 235 ist die optionale Vergabe einer neuen IPv6-Adresse im Bereich des neuen IPv6 Prefix durch den Router 30 an das Datenendgerät 31 mit der Schadsoftware dargestellt.

Auch der Datenverkehr 236 und 236a ist optional und erfolgt vorzugsweise mittels einer besonderen Behandlung dieses Datenverkehrs mit bestimmten IPv6-Prefixen. So wird beispielsweise im Netz des Netzwerkanbieters der Datenverkehr vom infizierten Datenendgerät 31 in einen Walled Garden 50 umgeleitet.

Das erfindungsgemäße Verfahren kann beispielsweise dadurch implementiert werden, indem der Routerbetriebssoftware eine erfindungsgemäße Applikation beigefügt wird, welche in regelmäßigen Abständen das Honeypot-System 51 bzw. das Early Warning System 21 abfragt, ob ein Gerät in dem Internet oder Local Area Network (LAN), das an den Router 30 angeschlossen ist eine Botnet-Anfragen erzeugt. Dies geschieht über den Abgleich der IPv6 Adresse. Vorzugsweise kann die Applikation auch in Form einer Firmware für den Router 30 bereitgestellt werden.

Wird diese Anfrage seitens des Honeypot-Systems 51 (hier beispielsweise das Early Warning Systems 41) positiv beantwortet, filtert der Router 30 den Traffic des infizierten Rechners 31 in dem angeschlossenen LAN aus dem Datenstrom heraus. Bei einer Anfrage eines Benutzers des infizierten Rechners 31 wird dann anstatt einer angefragten Zielwebseite eine lokale Webseite mit einem Warnhinweis eingeblendet. Ferner wird die Anfrage eines Benutzers des infizierten Rechners 31 optional auf eine externe Webseite insbesondere in einem Walled Garden umgeleitet. Der Benutzer wird darauf hingewiesen, dass ein Rechner 31 durch ein Botnet Virus infiziert ist und die ursprünglich angefragte Zielwebseite erst nach Lesen und Bestätigung des Warnhinweises und optional dem Lösen einer Sicherheitsabfrage, um sicherzustellen, dass es sich dabei um einen Nutzer und nicht um ein Softwareprogramm handelt, welches die Anfrage stellt, freigegeben wird. Es ist auch möglich, dass automatische Programme dabei gestartet werden, die die Schadsoftware von dem Botnet-Rechner entfernen.

Alternativ oder zusätzlich kann auch eine Nachricht von dem Router 30 an den Early Warning Server oder einen von diesem bestimmten Server geleitet werden, welcher eine vorbestimmte Nachricht an ein Kurznachrichten-Center (SMSC) eines Telekommunikationsanbieters weiterleitet. Das SMSC senden dann an eine dem Benutzer zugeordnete vorbestimmte Mobilfunknummer eine Kurznachricht an das Telefon mit einem Hinweis auf die Infizierung eines benutzten Botnet-Rechners durch eine Schadsoftware.

Desweiteren kann eine Nachricht auch über einen anderen Kurzmitteilungsdienst oder auch per Mail, Kurier oder Briefpost zugestellt werden.

Weitere Ausführungen können dem Fachmann bei Betrachtung in der Beschreibung der vorliegenden Erfindung in den Sinn kommen. Beispielweise kann der Rechner automatisch in dem Intranet identifiziert werden und mittels Virenscannersoftware untersucht und neu installiert werden.

Weiterhin kann der Router auch einem Meldung auf eine Webseite des Internet Service Providers abgeben, in der Informationen über den Sicherheitszustand der in dem Netz versorgten Rechner verarbeitet wird.

## Patentansprüche

1. Verfahren der Konfiguration eines Routers (30), welcher mit dem Internet (4) in Verbindung steht und zusätzlich mit einem Intranet (3) in Verbindung steht, und im Intranet (3) mindestens ein Datenendgerät (31) mit dem Router (30) verbunden ist,
wobei Informationen über eine Identität des Datenendgeräts (31) mit einem Server (21) im Internet (4) ausgetauscht werden, und die Identität des Datenendgeräts (31) mit Identitäten einer ersten Gruppe von Identitäten von Geräten verglichen wird, die mit Schadsoftware manipuliert bzw. infiziert wurden, und
der Router (30) den Datenverkehr des angeschlossenen Datenendgeräts (31) dann beeinflusst, wenn die Identität des Datenendgeräts (31) zu der ersten Gruppe von Identitäten zugehörig ist, und
wobei das Datenendgerät (31) eindeutig durch die Verwendung von IPv6 identifiziert wird, wobei der Vergleich der Identität des Datenendgeräts (31) auf dem Server (21) erfolgt.

2. Verfahren nach Anspruch 1, wobei der Server (21) ein Teil eines Early Warning Systems (21) ist, das eine Blackliste der als boshaft identifizierten IP Adressen eines frei wählbaren Zeitraums zur Verfügung stellt, und das Datenendgerät vom Server (21) durch die IPv6 Adressierung auch außerhalb des Intranets eindeutig identifizierbar ist.

3. Verfahren nach Anspruch 1 oder 2, wobei der Router (30) die Informationen über eine Identität des Datenendgeräts mit dem Server (21) austauscht.

4. Verfahren nach einem der vorhergehenden Ansprüche, wobei der Datenverkehr zusätzlicher Datenendgeräte, die zusätzlich zum Datenendgerät (31) mit dem Router (30) im Intranet (3) verbunden sind, nicht beeinflusst wird, und diese zusätzlichen Datenendgeräte aufgrund der Verwendung von IPv6 eindeutig identifizierbar sind.

5. Verfahren nach einem der vorhergehenden Ansprüche, wobei die Beeinflussung des Datenverkehrs des Datenendgeräts (31) ein Umleiten des Datenverkehrs ist, z.B. zu einem Walled Garden (50).

6. Verfahren nach einem der vorhergehenden Ansprüche, wobei
i) der Router (30) ein spezielles IPv6 Prefix erhält, wenn der Router (30) an einem Dienst zur Erkennung von Schadsoftware teilnimmt, oder
ii) der Router (30) ein spezielles IPv6 Prefix erst dann erhält, wenn über den Vergleich mit dem Server (21) festgestellt wurde, dass mindestens ein Datenendgerät (31) des Intranets (3) mit Schadsoftware manipuliert wurde bzw. infiziert ist.

7. Verfahren nach Anspruch 6, wobei der Router (30) eines durch Schadsoftware identifizierten Datenendgeräts (31) einen eindeutigen Interface Identifier innerhalb des speziellen IPv6 Prefix vergibt.

8. Verfahren nach einem der vorhergehenden Ansprüche, wobei die MAC-Adresse des Datenendgeräts (31) verwendet wird, um das Datenendgerät (31) zu identifizieren bzw. zu klassifizieren.

9. Verfahren nach einem der vorhergehenden Ansprüche, wobei eine Bridge bzw. ein Gateway, die/das über einen Feldbus mit einem Feldbusgerät verbunden ist mittels IPv6 identifiziert wird, so dass der entsprechende Datenverkehr dieses Feldbusgeräts beeinflusst wird, beispielsweise umgeleitet bzw. blockiert wird.

10. System mit:
i) einem Router (30), der mit einem Intranet (3) und einem Internet (4) in Verbindung steht, und
ii) einem Server (21) im Internet,
wobei der Router (30) dazu eingerichtet ist, Informationen über eine Identität eines Datenendgeräts (31) des Intranets (3) mit dem Server (21) im Internet auzutauschen, zur Durchführung des Verfahrens nach einem der vorhergehenden Ansprüche auf dem Router (30), wobei der Server dazu eingerichtet ist, den Vergleich durchzuführen.

## Claims

1. A method of configuring a router (30) which communicates with the Internet (4) and additionally communicates with an intranet (3), and in the intranet (3) at least one terminal (31) is connected to the router (30),
wherein information about an identity of the terminal (31) is exchanged with a server (21) in the Internet (4) and the identity of the terminal (31) is compared with identities of a first group of identities of devices which have been manipulated or infected with malware, and
the router (30) influences the data traffic of the connected terminal (31) when the identity of the terminal (31) belongs to the first group of identities, and
wherein the terminal (31) is uniquely identified by the use of IPv6, wherein the comparison of the identity of the terminal (31) is performed on the server (21).

2. The method according to claim 1, wherein the server (21) is part of an early warning system (21) providing a blacklist of the IP addresses of a freely selectable time period being identified as being malicious, and the terminal is uniquely identifiable by the server (21) by the IPv6 addressing also outside the intranet.

3. The method according to claim 1 or 2, wherein the router (30) exchanges the information about an identity of the terminal with the server (21).

4. The method according to any one of the preceding claims, wherein the data traffic of additional terminals that are connected to the router (30) in the intranet (3) in addition to the terminal (31) is not influenced and said additional terminals are clearly identifiable because of the use of IPv6.

5. The method according to any one of the preceding claims, wherein the influence on the data traffic of the terminal (31) is a redirection of the data traffic, e.g. to a walled garden (50).

6. The method according to any one of the preceding claims, wherein
(i) the router (30) receives a specific IPv6 prefix when the router (30) participates in a service for detecting malware, or,
(ii) the router (30) receives a specific IPv6 prefix only after it has been detected by a comparison with the server (21) that at least one terminal (31) of the intranet (3) was manipulated or is infected by malware.

7. The method according to claim 6, wherein the router (30) of a terminal (31) that has been infected by malware assigns a unique interface identifier within the specific IPv6 prefix.

8. The method according to any one of the preceding claims, wherein the MAC address of the terminal (31) is used for identifying or classifying the terminal (31).

9. The method according to any one of the preceding claims, wherein a bridge or a gateway which is connected to a field bus device via a field bus is identified by means of IPv6 so that the respective data traffic of said field bus device is influenced, for example redirected or blocked.

10. A system comprising:
(i) a router (30) which communicates with an intranet (3) and an Internet (4), and
(ii) a server (21) in the Internet,
wherein the router (30) is configured to exchange information about an identity of a terminal (31) of the intranet (3) with the server (21) in the Internet for performing the method according to any one of the preceding claims on the router (30), wherein the server is configured to perform the comparison.

## Revendications

1. Procédé de configuration d'un routeur (30), lequel est en connexion avec l'Internet (4) et est, en outre, en connexion avec un intranet (3), et dans l'intranet (3) au moins un équipement terminal de données (31) est connecté au routeur (30), dans lequel des informations sur l'identité de l'équipement terminal de données (31) sont échangées avec un serveur (21) sur Internet (4), et l'identité de l'équipement terminal de données (31) est comparée aux identités d'un premier groupe d'identités d'équipements, qui ont été manipulées ou infectées par un logiciel malveillant, et le routeur (30) influence ensuite la circulation des données de l'équipement terminal de données raccordé (31), lorsque l'identité de l'équipement terminal de données (31) appartient au premier groupe des identités, et dans lequel l'équipement terminal de données (31) est identifié clairement par l'utilisation d'IPv6, dans lequel la comparaison de l'identité de l'équipement terminal de données (31) se produit sur le serveur (21).

2. Procédé selon la revendication 1, dans lequel le serveur (21) est une partie d'un Early Warning System - *système d'alerte précoce* - (21), qui met à disposition une liste noire des adresses IP identifiées comme malveillantes d'une période pouvant être librement choisie, et l'équipement terminal de données peut être identifié clairement par le serveur (21) par l'adressage IPv6 même à l'extérieur de l'intranet.

3. Procédé selon la revendication 1 ou 2, dans lequel le routeur (30) échange avec le serveur (21) les informations sur une identité de l'équipement terminal de données.

4. Procédé selon l'une des revendications précédentes, dans lequel la circulation des données d'équipements terminaux de données supplémentaires qui, en plus de l'équipement terminal de données (31), sont connectés au routeur (30) dans l'intranet (3), n'est pas influencée, et ces équipements terminaux de données supplémentaires peuvent être identifiés clairement en raison de l'utilisation d'IPv6.

5. Procédé selon l'une des revendications précédentes, dans lequel l'influence de la circulation des données de l'équipement terminal de données (31) est une redirection de la circulation des données, par exemple, vers un Walled Garden - *jardin clos* - (50).

6. Procédé selon l'une des revendications précédentes, dans lequel
i) le routeur (30) obtient un préfixe IPv6 spécial lorsque le routeur (30) participe à un service de reconnaissance de logiciel malveillant, ou
ii) le routeur (30) obtient ensuite un préfixe IPv6 spécial uniquement lorsque, par la comparaison avec le serveur (21), il a été constaté qu'au moins un équipement terminal de données (31) de l'intranet (3) a été manipulé ou est infecté par le logiciel malveillant.

7. Procédé selon la revendication 6, dans lequel le routeur (30) d'un équipement terminal de données (31) identifié par le logiciel malveillant attribue un identificateur d'interface clair au sein du préfixe spécial IPv6.

8. Procédé selon l'une des revendications précédentes, dans lequel l'adresse-MAC de l'équipement terminal de données (31) est utilisée pour identifier ou classer l'équipement terminal de données (31).

9. Procédé selon l'une des revendications précédentes, dans lequel un pont ou une passerelle, qui est relié(e) par un bus de terrain à un dispositif de bus de terrain, est identifié(e) à l'aide de l'IPv6 de sorte que la circulation de données correspondantes de ce dispositif de bus de terrain est influencée, par exemple, est redirigée ou bloquée.

10. Système avec
i) un routeur (30) qui est en connexion avec un intranet (3) et un Internet (4), et
ii) un serveur (21) sur Internet,
dans lequel le routeur (30) est configuré pour échanger, sur Internet avec le serveur (21), des informations sur une identité d'un équipement terminal de données (31) de l'intranet (3), pour réaliser le procédé selon l'une des revendications précédentes sur le routeur (30), dans lequel le serveur est configuré pour effectuer la comparaison.
